# EUROPEAN PATENT APPLICATION

(11) **EP 4 593 257 A1**
(43) Date of publication of application: **30.07.2025**
(21) Application number: 25153888.0
(22) Date of filing: 24.01.2025
(51) Int. Cl.: H02K 1/276, H02K 29/03

(54) **ROTOR ASSEMBLY AND ELECTRIC MACHINE INCLUDING THE SAME**

(30) Priority: 27.01.2024 US 202463625964 P
(71) Applicant: BorgWarner Inc., Auburn Hills, MI 48326 (US)
(72) Inventor: DIKO, Andi, 48326 Auburn Hills (US)
(74) Representative: Peterreins Schley

(57) **Abstract**

A rotor assembly for use in an electric machine includes a defining a first magnet pocket and a second magnet pocket. The first magnet pocket includes a first magnet portion, a first inner magnet portion, and a first outer magnet portion. The second magnet pocket includes a second magnet portion, a second inner magnet portion, and a second outer magnet portion. The rotor assembly additionally includes a first magnet disposed in the first magnet portion and a second magnet disposed in the second magnet portion. The first inner magnet portion has a curved configuration that terminates at a first inner tip, and the second inner magnet portion has a curved configuration that terminates at a second inner tip.

## Description

### CROSS-REFERENCE TO RELATED APPLICATIONS

This application claims priority to and all the benefits of United States Provisional Application No. 63/625,964, filed January 27, 2024, which is hereby incorporated by reference in its entirety.

### BACKGROUND OF THE INVENTION

### 1. Field of the Invention

The subject invention relates to a rotor assembly and, in particular, a rotor assembly for use in an electric machine.

### 2. Description of Related Art

Typical electric machines, such as for use in a vehicle, include a rotor assembly including a rotor extending along and rotatable about a rotor axis, a shaft extending along the rotor axis, and a stator coupled to and disposed about the rotor with respect to the rotor axis. As performance and efficiency demands continue to increase for vehicles, the demand on electric machines has increased. For example, with higher output from electric machines, desired rotational speed of the shaft has increased, which then increases the need to improve the structural integrity of the rotor.

To this end, there remains a need for an improved rotor assembly for an electric machine.

### SUMMARY OF THE INVENTION

A rotor assembly for use in an electric machine includes a rotor extending along and adapted to be rotatable about a rotor axis. The rotor has a first rotor end and a second rotor end spaced from the first rotor end with respect to the rotor axis. The rotor defines a first magnet pocket extending from the first rotor end to the second rotor end, and a second magnet pocket extending from the first rotor end to the second rotor end. The rotor has an inner rotor surface defining a rotor interior and an outer rotor surface facing away from the rotor interior. The first magnet pocket includes a first magnet portion, a first inner magnet portion, and a first outer magnet portion. The first magnet portion is disposed between the first inner magnet portion and the first outer magnet portion with respect to the rotor axis such that the first inner magnet portion and the first outer magnet portion are spaced from one another with respect to the rotor axis. The second magnet pocket includes a second magnet portion, a second inner magnet portion, and a second outer magnet portion. The second magnet portion is disposed between the second inner magnet portion and the second outer magnet portion with respect to the rotor axis such that the second inner magnet portion and the second outer magnet portion are spaced from one another with respect to the rotor axis. The rotor assembly additionally includes a first magnet disposed in the first magnet portion. The first magnet has a first magnet side facing the outer rotor surface and a second magnet side opposite the first magnet side of the first magnet and facing the inner rotor surface. The rotor assembly further includes a second magnet disposed in the second magnet portion. The second magnet has a first magnet side facing the outer rotor surface and a second magnet side opposite the first magnet side of the second magnet and facing the inner rotor surface. The first inner magnet portion has a curved configuration that terminates at a first inner tip disposed between the second magnet side of the first magnet and the rotor axis, and the second inner magnet portion has a curved configuration that terminates at a second inner tip disposed between the second magnet side of the second magnet and the rotor axis.

### BRIEF DESCRIPTION OF THE DRAWINGS

Other advantages of the present disclosure will be readily appreciated, as the same becomes better understood by reference to the following detailed description when considered in connection with the accompanying drawings.
FIG. 1 is a perspective view of an electric machine.
FIG. 2 is a perspective view of the electric machine including a rotor assembly, with the rotor assembly including a rotor and a stator.
FIG. 3 is a perspective view of the rotor.
FIG. 4 is a top view of a portion of the rotor, with the rotor defining a first magnet pocket and a second magnet pocket, with the first magnet pocket including a first magnet portion, a first inner magnet portion, and a first outer magnet portion, and with the second magnet pocket including a second magnet portion, a second inner magnet portion, and a second outer magnet portion.
FIG. 5 is a top view of the first magnet pocket, with the first inner magnet portion of the first magnet pocket having a curved configuration that terminates at a first inner tip.
FIG. 6 is a top view of the second magnet pocket, with the second inner magnet portion of the second magnet pocket having a curved configuration that terminates at a second inner tip.

### DETAILED DESCRIPTION OF THE INVENTION

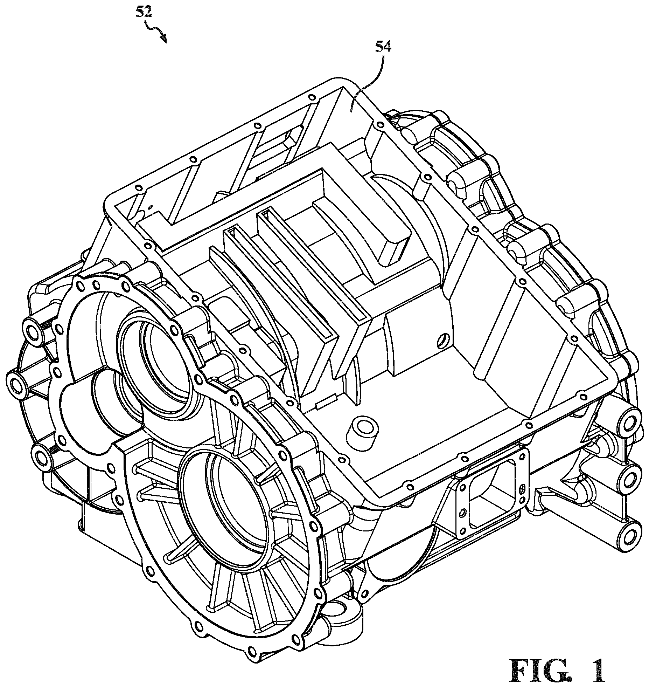

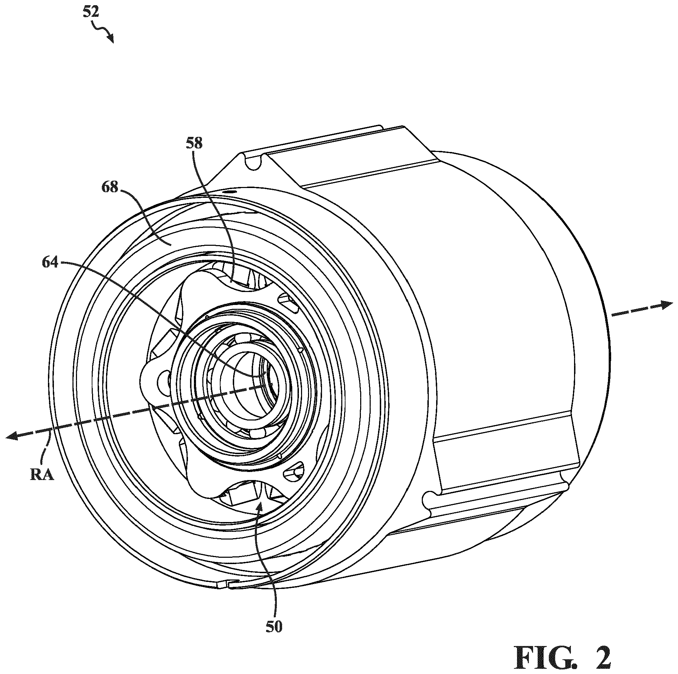

With reference to the Figures, wherein like numerals indicate like parts throughout the several views, a rotor assembly 50 for use in an electric machine 52 is shown in FIGS. 1-3. The electric machine 52 may include a machine housing 54 defining a machine housing interior.

With continued reference to FIGS. 1-3, the rotor assembly 50 includes a rotor 58 that extends along and is adapted to be rotatable about a rotor axis RA. The rotor 58 has a first rotor end 60 and a second rotor end 62 spaced from the first rotor end 60 with respect to the rotor axis RA. The rotor 58 may be comprised of lamination stacks.

The electric machine 52 includes the rotor assembly 50, a shaft 64 extending along the rotor axis RA, wherein the rotor 58 defines a rotor interior 66 and the shaft 64 is disposed in the rotor interior 66 and coupled to the rotor 58, and a stator 68 coupled to and disposed about the rotor 58 with respect to the rotor axis RA. The shaft 64 may be integral with the rotor 58 (i.e., one-piece) or the shaft 64 may be a separate component from the rotor 58 (i.e., two or more components).

The rotor assembly 50 and, therefore, the electric machine 52, may be used in any suitable application, such as in a vehicle, traction electric machines, turbomachinery, boats, trains, and the like. The electric machine 52 may be used in any tractive and/or electrical power generating. In other words, the electric machine 52 may be configured as a motor and/or a generator. The rotor 58 and, therefore, the shaft 64 may be configured to rotate greater than 18,000 RPM, greater than 19,000 RPM, greater than 20,000 RPM, greater than 21,000 RPM, greater than 22,000 RPM, greater than 23,000 RPM, greater than 24,000 RPM, greater than 25,000 RPM, greater than 26,000 RPM, and/or greater than 27,000 RPM during operation of the electric machine 52, as described in further detail below.

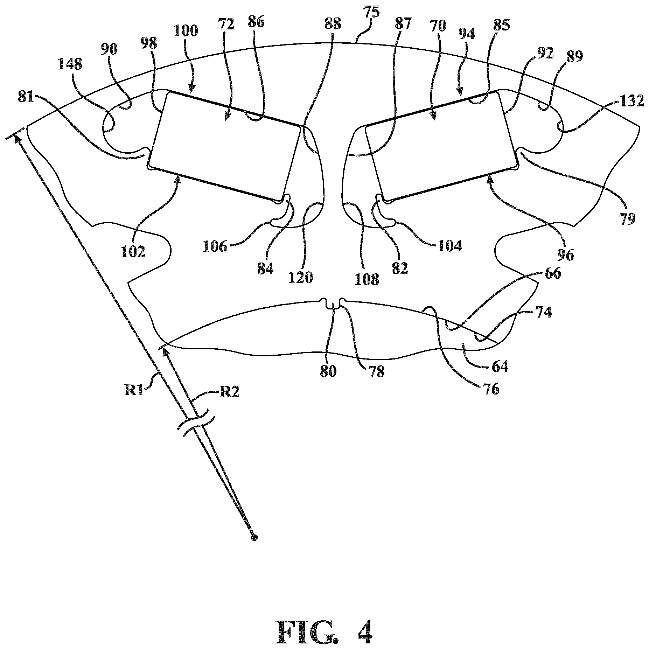

With reference to FIG. 4, the rotor 58 defines a first magnet pocket 70 extending from the first rotor end 60 to the second rotor end 62. The rotor 58 defines a second magnet pocket 72 extending from the first rotor end 60 to the second rotor end 62. The rotor 58 has an inner rotor surface 74 defining the rotor interior 66 and an outer rotor surface 75 facing away from the rotor interior 66.

The shaft 64 may have an outer shaft surface 76 facing and engaged with the inner rotor surface 74. The outer shaft surface 76 may define a notch 78, and the rotor 58 may have a first protrusion 80 extending from the inner rotor surface 74 into the notch 78 for rotatably coupling the rotor 58 to the rotor shaft 64. In one embodiment, the first protrusion 80 is disposed between the first and second magnet pockets 70, 72 with respect to the rotor axis RA.

The first magnet pocket 70 comprises a first magnet portion 85, a first inner magnet portion 87 (may be referred to as a first inner magnet bridge), and a first outer magnet portion 89 (may be referred to as a first outer magnet bridge), with the first magnet portion 85 being disposed between the first inner magnet portion 87 and the first outer magnet portion 89 with respect to the rotor axis RA such that the first inner magnet portion 87 and the first outer magnet portion 89 are spaced from one another with respect to the rotor axis RA. The first magnet portion 85, the first inner magnet portion 87, and the first outer magnet portion 89 may be referred to as being sub-pockets of the first magnet pocket 70. In other words, the first magnet portion 85, the first inner magnet portion 87, and the first outer magnet portion 89 may be fluidly coupled to one another such that they collectively define the first magnet pocket 70. It is to be appreciated that the rotor assembly 50 may not include the first outer magnet portion 89 such that there are embodiments where the first magnet pocket 70 only includes the first magnet portion 85 and the first inner magnet portion 87.

The second magnet pocket 72 includes a second magnet portion 86, a second inner magnet portion 88 (may be referred to as a second inner magnet bridge), and a second outer magnet portion 90 (may be referred to as a second outer magnet bridge), with the second magnet portion 86 being disposed between the second inner magnet portion 88 and the second outer magnet portion 90 with respect to the rotor axis RA such that the second inner magnet portion 88 and the second outer magnet portion 90 are spaced from one another with respect to the rotor axis RA. The second magnet portion 86, the second inner magnet portion 88, and the second outer magnet portion 90 may be referred to as being sub-pockets of the second magnet pocket 72. In other words, the second magnet portion 86, the second inner magnet portion 88, and the second outer magnet portion 90 may be fluidly coupled to one another such that they collectively define the second magnet pocket 72. It is to be appreciated that the rotor assembly 50 may not include the second outer magnet portion 90 such that there are embodiments where the second magnet pocket 72 only includes the second magnet portion 86 and the second inner magnet portion 88.

The rotor assembly 50 further includes a first magnet 92 disposed in the first magnet portion 85, wherein the first magnet 92 has a first magnet side 94 facing the outer rotor surface and a second magnet side 96 opposite the first magnet side 94 of the first magnet 92 and facing the inner rotor surface 74. The rotor assembly 50 additionally includes a second magnet 98 disposed in the second magnet portion 86, wherein the second magnet 98 has a first magnet side 100 facing the outer rotor surface 75 and a second magnet side 102 opposite the first magnet side 100 of the second magnet 98 and facing the inner rotor surface 74.

The first inner magnet portion 87 has a curved configuration, for example a talon configuration, that terminates at a first inner tip 104 disposed between the second magnet side 96 of the first magnet 92 and the rotor axis RA, and the second inner magnet portion 88 has a curved configuration, for example a talon configuration, that terminates at a second inner tip 106 disposed between the second magnet side 102 of the second magnet 98 and the rotor axis RA.

Having the first inner magnet portion 87 having a curved configuration that terminates at the first inner tip 104 disposed between the second magnet side 96 of the first magnet 92 and the rotor axis RA, and having the second inner magnet portion 88 having a curved configuration that terminates at the second inner tip 106 disposed between the second magnet side 102 of the second magnet 98 and the rotor axis RA offers several advantages. First, such a configuration of the first inner magnet portion 87 and the second inner magnet portion 88 allows the rotor 58 to be rotatable at higher RPM, such as well above 18,000 RPM (e.g., 23,000 RPM), than typical electric machines. For example, typical electric machines may have rotors that are rotatable up to 18,000 RPM. However, when the RPM of such rotors exceeds 18,000 RPM, such rotors fail, for example, by losing structural integrity which often jeopardizes the magnets and other components in the rotor. Second, such a configuration allows the rotor 58 to be strategically in compression in various locations of the rotor 58, which further strengthens the structural integrity of the rotor 58, particularly during high RPMs.

To further strengthen the structural integrity of the rotor 58, the rotor assembly 50 may include a first inner protrusion 82 adjacent the second magnet side 96 of the first magnet 92. When present, the first inner protrusion 82 may extend into the first magnet pocket 70 and partially separate the first magnet portion 85 and the first inner magnet portion 87. Similarly, the rotor assembly 50 may include a second inner protrusion 84 adjacent the second magnet side 102 of the second magnet 98. When present, the second inner protrusion 84 may extend into the second magnet pocket 72 and partially separate the second magnet portion 86 and the second inner magnet portion 88. The first inner tip 104 may be disposed between the first inner protrusion 82 and the rotor axis RA, and the second inner tip 106 may be disposed between the second inner protrusion 84 and the rotor axis RA.

To further strengthen the structural integrity of the rotor 58, the rotor assembly 50 may include a first outer protrusion 79 adjacent the second magnet side 96 of the first magnet 92. When present, the first outer protrusion 79 may extend into the first magnet pocket 70 and partially separate the first magnet portion 85 and the first outer magnet portion 89. Similarly, the rotor assembly 50 may include a second outer protrusion 81 adjacent the second magnet side 102 of the second magnet 98. When present, the second outer protrusion 81 may extend into the second magnet pocket 72 and partially separate the second magnet portion 86 and the second outer magnet portion 90. The first inner tip 104 may be disposed between the first inner protrusion 82 and the rotor axis RA, and the second inner tip 106 may be disposed between the second inner protrusion 84 and the rotor axis RA.

A material, such as an injection molded material, may be disposed in the first inner magnet portion 87 and the first outer magnet portion 89 of the first magnet pocket 70, and material, such as an injection molded material, may be disposed in the second inner magnet portion 88 and the second outer magnet portion 90 of the second magnet pocket 72. Alternatively, the first inner magnet portion 87 and the first outer magnet portion 89 of the first magnet pocket 70 may be filled with air to provide additional cooling to the rotor 58, and the second inner magnet portion 88 and the second outer magnet portion 90 of the second magnet pocket 72 may be filled with air to provide additional cooling to the rotor 58.

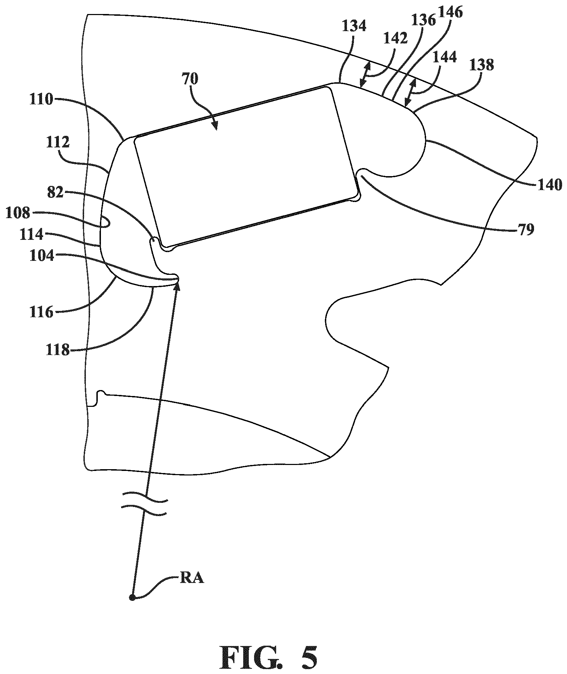

With particular reference to FIG. 5, the rotor 58 may have an inner first pocket surface 108 facing the first magnet 92 and defining the first inner magnet portion 87 with the first magnet 92. The inner first pocket surface 108 has a first inner curve 110 adjacent the first magnet side 94, a second inner curve 112 adjacent the first inner curve 110, a third inner curve 114 adjacent the second inner curve 112 such that the second inner curve 112 is disposed between the first inner curve 110 of the inner first pocket surface 108 and the third inner curve 114 of the inner first pocket surface 108, a fourth inner curve 116 adjacent the third inner curve 114 such that the third inner curve 114 is disposed between the second inner curve 112 of the inner first pocket surface 108 and the fourth inner curve 116 of the inner first pocket surface 108, and a fifth inner curve 118 adjacent the first inner tip 104 such that the fourth inner curve 116 is disposed between the third inner curve 114 of the inner first pocket surface 108 and the fifth inner curve 118 of the inner first pocket surface 108. Typically, the first inner curve 110, the second inner curve 112, the third inner curve 114, the fourth inner curve 116, and the fifth inner curve 118 are all tangent to one another.

The first inner curve 110 of the inner first pocket surface 108 may have a first inner curve radius, the second inner curve 112 of the inner first pocket surface 108 may have a second inner curve radius, the third inner curve 114 of the inner first pocket surface 108 may have a third inner curve radius, the fourth inner curve 116 of the inner first pocket surface 108 may have a fourth inner curve radius, and the fifth inner curve 118 of the inner first pocket surface 108 may have a fifth inner curve radius. The first inner curve radius, the second inner curve radius, the third inner curve radius, the fourth inner curve radius, and the fifth inner curve radius may all be all different from one another.

For example, the first inner curve radius and the third inner curve radius may be less than the second inner curve radius, and the second inner curve radius and the fourth inner curve radius are greater than the third inner curve radius.

The rotor 58 may have an outer rotor radius R1, as shown in FIG. 4, defined between the outer rotor surface 75 and the rotor axis RA. Various ratios of the outer rotor radius R1 to the first, second, third, fourth, and fifth inner curve radii of the first, second, third, fourth, and fifth inner curve 110, 112, 114, 116, 118, respectively, of the inner first pocket surface 108 may be adjusted based on the structural requirements of the rotor 58.

For example, a ratio of the outer rotor radius R1 to the first inner curve radius of the first inner curve 110 of the inner first pocket surface 108 may be between 38.0: 1 and 46.0: 1. The ratio of the outer rotor radius R1 to the first inner curve radius of the first inner curve 110 of the inner first pocket surface 108 may be between 41.5:1 and 42.3:1. The ratio of the outer rotor radius R1 to the first inner curve radius of the first inner curve 110 of the inner first pocket surface 108 may be 41.9.

Additionally, for example, a ratio of the outer rotor radius R1 to the second inner curve radius of the second inner curve 112 of the inner first pocket surface 108 may be between 3.5: 1 and 4.3:1. The ratio of the outer rotor radius R1 to the second inner curve radius of the second inner curve 112 of the inner first pocket surface 108 may be between 3.8:1 and 4.0:1. The ratio of the outer rotor radius R1 to the second inner curve radius of the second inner curve 112 of the inner first pocket surface 108 may be 3.9.

Additionally, for example, a ratio of the outer rotor radius R1 to the third inner curve radius of the third inner curve 114 of the inner first pocket surface 108 may be between 20.0: 1 and 24.0:1. The ratio of the outer rotor radius R1 to the third inner curve radius of the third inner curve 114 of the inner first pocket surface 108 may be between 22.0:1 and 22.6:1. The ratio of the outer rotor radius R1 to the third inner curve radius of the third inner curve 114 of the inner first pocket surface 108 may be 22.3.

Additionally, for example, a ratio of the outer rotor radius R1 to the fourth inner curve radius of the fourth inner curve 116 of the inner first pocket surface 108 may be between 10.0:1 and 14.0:1. The ratio of the outer rotor radius R1 to the fourth inner curve radius of the fourth inner curve 116 of the inner first pocket surface 108 may be between 12.0:1 and 12.4:1. The ratio of the outer rotor radius R1 to the fourth inner curve radius of the fourth inner curve 116 of the inner first pocket surface 108 may be 12.2.

Additionally, for example, a ratio of the outer rotor radius R1 to the fifth inner curve radius of the fifth inner curve 118 of the inner first pocket surface 108 may be between 7.0:1 and 9.0:1. The ratio of the outer rotor radius R1 to the fifth inner curve radius of the fifth inner curve 118 of the inner first pocket surface 108 may be between 7.9:1 and 8.1:1. The ratio of the outer rotor radius R1 to the fifth inner curve radius of the fifth inner curve 118 of the inner first pocket surface 108 may be 8.0:1.

Adjusting the above ratios can help enable a reduced leakage flux in the first inner magnet portion 87.

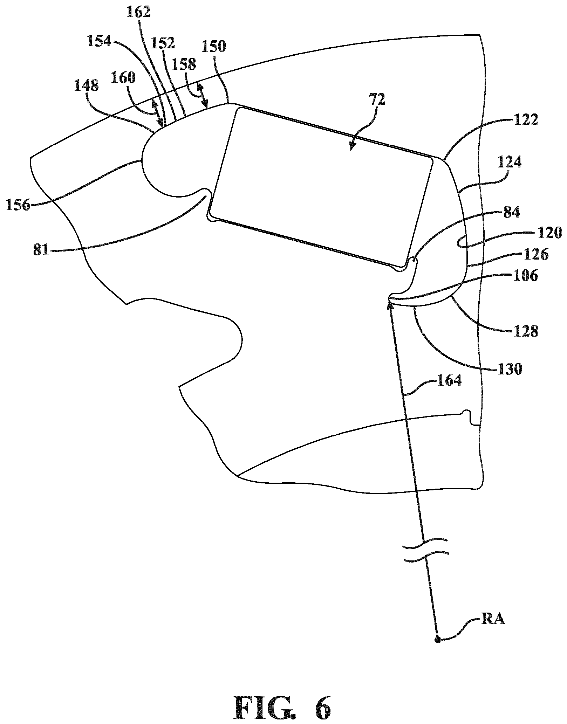

Similar to the inner first pocket surface 108, the rotor 58 may include an inner second pocket surface 120, as shown in FIG. 6, facing the second magnet 98 and defining the second inner magnet portion 88 with the second magnet 98, The inner second pocket surface 120 may have a first inner curve 122 adjacent the first magnet side 100 of the second magnet 98, a second inner curve 124 adjacent the first inner curve 122 of the inner second pocket surface 120, a third inner curve 126 adjacent the second inner curve 124 of the inner second pocket surface 120 such that the second inner curve 124 of the inner second pocket surface 120 is disposed between the first inner curve 122 of the inner second pocket surface 120 and the third inner curve 126 of the inner second pocket surface 120, a fourth inner curve 128 adjacent the third inner curve 126 of the inner second pocket surface 120 such that the third inner curve 126 is disposed between the second inner curve 124 of the inner second pocket surface 120 and the fourth inner curve 128 of the inner second pocket surface 120, and a fifth inner curve 130 adjacent the second inner tip 106 such that the fourth inner curve 128 of the inner second pocket surface 120 is disposed between the third inner curve 126 of the inner second pocket surface 120 and the fifth inner curve 130 of the inner first pocket surface 108.

The first inner curve 122 of the inner second pocket surface 120 may have a first inner curve radius, the second inner curve 124 of the inner second pocket surface 120 may have a second inner curve radius, the third inner curve 126 of the inner second pocket surface 120 may have a third inner curve radius, the fourth inner curve 128 of the inner second pocket surface 120 may have a fourth inner curve radius, and the fifth inner curve 130 of the inner second pocket surface 120 may have a fifth inner curve radius. The first inner curve radius of the first inner curve 122 of the inner second pocket surface 120, the second inner curve radius of the second inner curve 124 of the inner second pocket surface 120, the third inner curve radius of the third inner curve 126 of the inner second pocket surface 120, the fourth inner curve radius of the fourth inner curve 128 of the inner second pocket surface 120, and the fifth inner curve radius of the fifth inner curve 130 of the inner second pocket surface 120 may all be different from one another.

For example, the second inner curve radius of the second inner curve 124 of the inner second pocket surface 120 and the third inner curve radius of the third inner curve 126 of the inner second pocket surface 120 may be less than the second inner curve radius of the second inner curve 124 of the inner second pocket surface 120, and the second inner curve radius of the second inner curve 124 of the inner second pocket surface 120 and the fourth inner curve radius of the fourth inner curve 128 of the inner second pocket surface 120 may be greater than the third inner curve radius of the third inner curve 126 of the inner second pocket surface 120.

Various ratios of the outer rotor radius R1 to the first, second, third, fourth, and fifth inner curve radii of the first, second, third, fourth, and fifth inner curves 122, 124, 126, 128, 130, respectively, of the inner second pocket surface 120 may be adjusted based on the structural requirements of the rotor 58.

For example, a ratio of the outer rotor radius R1 to the first inner curve radius of the first inner curve 122 of the inner second pocket surface 120 may be is between 38.0:1 and 46.0:1. The ratio of the outer rotor radius R1 to the first inner curve radius of the first inner curve 122 of the inner second pocket surface 120 may be is between 41.5:1 and 42.3:1. The ratio of the outer rotor radius R1 to the first inner curve radius of the first inner curve 122 of the inner second pocket surface 120 may be 41.9.

Additionally, for example, a ratio of the outer rotor radius R1 to the second inner curve radius of the second inner curve 124 of the inner second pocket surface 120 may be between 3.5:1 and 4.3:1. The ratio of the outer rotor radius to the second inner curve radius of the second inner curve 124 of the inner second pocket surface 120 may be between 3.8:1 and 4.0:1. The ratio of the outer rotor radius R1 to the second inner curve radius of the second inner curve 112 of the inner second pocket surface 120 may be 3.9.

Additionally, for example, a ratio of the outer rotor radius R1 to the third inner curve radius of the third inner curve 126 of the inner second pocket surface 120 may be between 20.0:1 and 24.0:1. The ratio of the outer rotor radius R1 to the third inner curve radius of the third inner curve 126 of the inner second pocket surface 120 may be between 22.0:1 and 22.6:1. The ratio of the outer rotor radius R1 to the third inner curve radius of the third inner curve 126 of the inner second pocket surface 120 may be 22.3.

Additionally, for example, a ratio of the outer rotor radius R1 to the fourth inner curve radius of the fourth inner curve 128 of the inner second pocket surface 120 may be between 10.0:1 and 14.0:1. The ratio of the outer rotor radius R1 to the fourth inner curve radius of the fourth inner curve 128 of the inner second pocket surface 120 may be between 12.0: 1 and 12.4: 1. The ratio of the outer rotor radius R1 to the fourth inner curve radius of the fourth inner curve 128 of the inner second pocket surface 120 may be 12.2.

Additionally, for example, a ratio of the outer rotor radius R1 to the fifth inner curve radius of the fifth inner curve 130 of the inner second pocket surface 120 may be between 7.0: 1 and 9.0:1. The ratio of the outer rotor radius R1 to the fifth inner curve radius of the fifth inner curve 130 of the inner second pocket surface 120 may be between 7.9:1 and 8.1:1. The ratio of the outer rotor radius R1 to the fifth inner curve radius of the fifth inner curve 130 of the inner second pocket surface 120 may be 8.0:1.

Adjusting the above ratios can help enable a reduced leakage flux in the second inner magnet portion 88.

As shown in FIG. 5, the rotor 58 may have an outer first pocket surface 132 facing the first magnet 92 and defining the first outer magnet portion 89 with the first magnet 92. The outer first pocket surface 132 has a first outer curve 134 adjacent the first magnet side 94, a second outer curve 136 adjacent the first outer curve 134, a third outer curve 138 adjacent the second outer curve 136 such that the second outer curve 136 is disposed between the first outer curve 134 of the outer first pocket surface 132 and the third outer curve 138 of the outer first pocket surface 132, and a fourth outer curve 140 adjacent the third outer curve 138 such that the third outer curve 138 is disposed between the second outer curve 136 and the fourth outer curve 140. The first outer curve 134 of the outer first pocket surface 132 may have a first outer curve radius, the second outer curve 136 of the outer first pocket surface 132 may have a second outer curve radius, the third outer curve 138 of the outer first pocket surface 132 may have a third outer curve radius, and the fourth outer curve 140 of the outer first pocket surface 132 may have a fourth outer curve radius. The first outer curve radius, the second outer curve radius, the third outer curve radius, and the fourth outer curve radius may all different from one another. Alternatively, the second outer curve radius and the third outer curve radius may be the same as one another, with the first outer curve radius and the fourth outer curve radius being different from the radius of the second and third outer curves.

Various ratios of the outer rotor radius R1 to the first, second, third, and fourth radii of the first, second, third, and fourth outer curve 134, 136, 138, 140, respectively, of the outer first pocket surface 132 may be adjusted based on the structural requirements of the rotor 58.

For example, a ratio of the outer rotor radius R1 to the first outer curve radius of the first outer curve 134 of the outer first pocket surface 132 may be between 24.0:1 and 27.0: 1. The ratio of the outer rotor radius R1 to the first outer curve radius of the first outer curve 134 of the outer first pocket surface 132 may be between 25.0: 1 and 26.0: 1. The ratio of the outer rotor radius R1 to the first outer curve radius of the first outer curve 134 of the outer first pocket surface 132 may be 25.2: 1.

Additionally, for example, a ratio of the outer rotor radius R1 to the second outer curve radius of the second outer curve 136 of the outer first pocket surface 132 may be between 3.0:1 and 4.0:1. The ratio of the outer rotor radius R1 to the second outer curve radius of the second outer curve 136 of the outer first pocket surface 132 may be between 3.40:1 and 3.50: 1. The ratio of the outer rotor radius R1 to the second outer curve radius of the second outer curve 136 of the outer first pocket surface 132 may be 3.45: 1.

Additionally, for example, a ratio of the outer rotor radius R1 to the third outer curve radius of the third outer curve 138 of the outer first pocket surface 132 may be between 3.0:1 and 4.0:1. The ratio of the outer rotor radius R1 to the third outer curve radius of the third outer curve 138 of the outer first pocket surface 132 may be between 3.40: 1 and 3.50: 1. The ratio of the outer rotor radius R1 to the third outer curve radius of the third outer curve 138 of the outer first pocket surface 132 may be 3.45: 1.

A first outer thickness 142 of the rotor 58 may be defined between the second outer curve 136 and the outer rotor surface 75, and a second outer thickness 142 of the rotor 58 may be defined between the third outer curve 138 and the outer rotor surface 75. The second outer thickness 142 may be greater than the first outer thickness 142. This may be achieved by having the second outer curve 136 and the third outer curve 138 having an first inflection point 146 therebetween.

Additionally, for example, a ratio of the outer rotor radius R1 to the fourth outer curve radius of the fourth outer curve 140 of the outer first pocket surface 132 may be between 22.0:1 and 26.0:1. The ratio of the outer rotor radius R1 to the fourth outer curve radius of the fourth outer curve 140 of the outer first pocket surface 132 may be between 23.9:1 and 24.5: 1. The ratio of the outer rotor radius R1 to the fourth outer curve radius of the fourth outer curve 140 of the outer first pocket surface 132 may be 24.2:1.

Adjusting the above ratios can help enable a reduced leakage flux in the outer first magnet portion 85.

The rotor 58 may have an outer second pocket surface 148, as shown in FIG. 6, facing the second magnet 98 and defining the second outer magnet portion 90 with the second magnet 98. The outer second pocket surface 148 may have a first outer curve 150 adjacent the first magnet side 100 of the second magnet 98, a second outer curve 152 adjacent the first outer curve 150 of the outer second pocket surface 148, a third outer curve 154 adjacent the second outer curve 152 of the outer second pocket surface 148 such that the second outer curve 152 of the outer second pocket surface 148 is disposed between the first outer curve 150 of the outer second pocket surface 148 and the third outer curve 154 of the outer second pocket surface 148, and a fourth outer curve 156 adjacent the third outer curve 154 of the outer second pocket surface 148 such that the third outer curve 154 of the outer second pocket surface 148 is disposed between the second outer curve 152 of the outer second pocket surface 148 and the fourth outer curve 156 of the outer second pocket surface 148.

The first outer curve 150 of the outer second pocket surface 148 may have a first outer curve radius, the second outer curve 152 of the outer second pocket surface 148 may have a second outer curve radius, the third outer curve 154 of the outer second pocket surface 148 may have a third outer curve radius, and the fourth outer curve 156 of the outer second pocket surface 148 may have a fourth outer curve radius. The first outer curve radius of the first outer curve 150 of the outer second pocket surface 148, the second outer curve radius of the second outer curve 152 of the outer second pocket surface 148, the third outer curve radius of the third outer curve 154 of the outer second pocket surface 148, and the fourth outer curve radius of the fourth outer curve 156 of the outer second pocket surface 148 may all be different from one another. Alternatively, the second outer curve radius of the second outer curve 152 of the outer second pocket surface 148 and the third outer curve radius of the third outer curve 154 of the outer second pocket surface 148 may be the same as one another, with the first outer curve radius of the first outer curve 150 of the outer second pocket surface 148 and the fourth outer curve radius of the fourth outer curve 156 of the outer second pocket surface 148 may be different from the radius of the second and third outer curves 152, 154 of the outer second pocket surface 148.

Various ratios of the outer rotor radius R1 to the first, second, third, and fourth radii of the first, second, third, and fourth outer curve 150, 152, 154, 156, respectively, of the outer second pocket surface 148 may be adjusted based on the structural requirements of the rotor 58.

For example, a ratio of the outer rotor radius R1 to the first outer curve radius of the first outer curve 150 of the outer second pocket surface 148 may be between 24.0:1 and 27.0:1. The ratio of the outer rotor radius R1 to the first outer curve radius of the first outer curve 150 of the outer second pocket surface 148 may be between 25.0:1 and 26.0: 1. The ratio of the outer rotor radius R1 to the first outer curve radius of the first outer curve 150 of the outer second pocket surface 148 may be 25.2:1.

Additionally, for example, a ratio of the outer rotor radius R1 to the second outer curve radius of the second outer curve 152 of the outer second pocket surface 148 may be between 3.0:1 and 4.0:1. The ratio of the outer rotor radius R1 to the second outer curve radius of the second outer curve 152 of the outer second pocket surface 148 may be between 3.40:1 and 3.50: 1. The ratio of the outer rotor radius R1 to the second outer curve radius of the second outer curve 152 of the outer second pocket surface 148 may be 3.45:1.

Additionally, for example, a ratio of the outer rotor radius R1 to the third outer curve radius of the third outer curve 154 of the outer second pocket surface 148 may be between 3.0: 1 and 4.0:1. The ratio of the outer rotor radius R1 to the third outer curve radius of the third outer curve 154 of the outer second pocket surface 148 may be between 3.40: 1 and 3.50: 1. The ratio of the outer rotor radius R1 to the third outer curve radius of the third outer curve 154 of the outer second pocket surface 148 may be 3.45: 1.

A first outer thickness 158 of the rotor 58 may be defined between the second outer curve 152 of the outer second pocket surface 148 and the outer rotor surface 75, and a second outer thickness 160 of the rotor 58 may be defined between the third outer curve 154 of the outer second pocket surface 148 and the outer rotor surface 75. The second outer thickness 160 may be greater than the first outer thickness 158. This may be achieved by having the second outer curve 152 of the outer second pocket surface 148 and the third outer curve 154 of the outer second pocket surface 148 having an second inflection point 162 therebetween.

Additionally, for example, a ratio of the outer rotor radius R1 to the fourth outer curve radius of the fourth outer curve 156 of the outer second pocket surface 148 may be between 22.0:1 and 26.0:1. The ratio of the outer rotor radius R1 to the fourth outer curve radius of the fourth outer curve 156 of the outer second pocket surface 148 may be between 23.9:1 and 24.5:1. The ratio of the outer rotor radius R1 to the fourth outer curve radius of the fourth outer curve 156 of the outer second pocket surface 148 may be 24.2:1.

Adjusting the above ratios can help enable a reduced leakage flux in the outer second magnet portion 86.

A first tip distance 164 may be defined between the first inner tip 104 and the rotor axis RA, and a second tip distance 166 may be defined between the second inner tip 106 and the rotor axis RA. A ratio of the outer rotor radius R1 to the first tip distance 164 may be between 1.30:1 and 1.60:1 and a ratio of the outer rotor radius R1 to the second tip distance 166 may be between 1.30:1 and 1.60:1. The ratio of the outer rotor radius R1 to the first tip distance 164 may be between 1.40:1 and 1.50:1 and the ratio of the outer rotor radius R1 to the second tip distance 166 may be between 1.40:1 and 1.50:1. The ratio of the outer rotor radius R1 to the first tip distance 164 may be between 1.444:1 and 1.46:1 and the ratio of the outer rotor radius R1 to the second tip distance 166 may be between 1.44:1 and 1.46:1. Such ratios help to minimize the distance defined between the first magnet pocket 70 and the inner rotor surface 74 and the distance defined between the second magnet pocket 72 and the inner rotor surface 74, which enables the portion of the rotor 58 disposed between the first and second magnet pockets 70, 72 and the inner rotor surface 74 to remain in compression during operation of the electric machine 52. Having this portion of the rotor 58, which is typically sensitive to alternating stresses, which, in turn, can lead to fatigue failure, under compression during operation of the electric machine 52 reduces the risk of fatigue failure of the rotor 58, especially in rotors having greater than 18,000 RPM.

An inner rotor radius R2 may be defined between the inner rotor surface 74 and the rotor axis RA, and a ratio of the first tip distance 164 to the inner rotor radius R2 may be between 1.15:1 and 1.22:1 and a ratio of the second tip distance 166 to the inner rotor radius R2 may be between 1.15:1 and 1.22:1. The ratio of the first tip distance 164 to the inner rotor radius R2 may be between 1.17:1 and 1.21:1 and the ratio of the second tip distance 166 to the inner rotor radius R2 may be between 1.17:1 and 1.21:1.

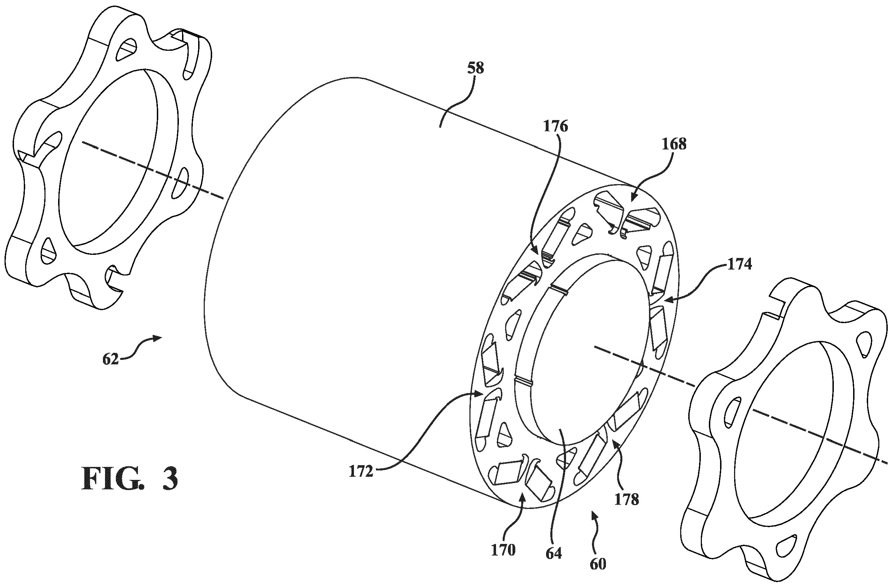

It is to be appreciated that the first magnet 92, the second magnet 98, the first magnet pocket 70, and the second magnet pocket 72 may be further defined as a first magnet assembly 168, and wherein the rotor assembly 50 further comprises a second magnet assembly 170, a third magnet assembly 172, and a fourth magnet assembly 174, with the first, second, third, and fourth magnet assemblies 168, 170, 172, and 174 being equally angularly spaced from one another about the rotor axis RA, as shown in FIG. 3. The rotor assembly 50 may further include a fifth magnet assembly 176 and a sixth magnet assembly 178, with the first, second, third, fourth, fifth, and sixth magnet assemblies 168, 170, 172, 174, 176, and 178 being equally angularly spaced from one another about the rotor axis RA. It is to be appreciated that the rotor assembly 50 may include any number of suitable magnet assemblies, such as three magnet assemblies, five magnet assemblies, seven magnet assemblies, or eight or more magnet assemblies.

Although the present invention has been described above and is defined in the attached claims, it should be understood that the invention may alternatively be defined in accordance with the following Statements:
Statement 1: A rotor assembly for use in an electric machine, said rotor assembly comprising:
   a rotor extending along and adapted to be rotatable about a rotor axis, wherein said rotor has a first rotor end and a second rotor end spaced from said first rotor end with respect to said rotor axis, wherein said rotor defines a first magnet pocket extending from said first rotor end to said second rotor end, wherein said rotor defines a second magnet pocket extending from said first rotor end to said second rotor end, and wherein said rotor has an inner rotor surface defining a rotor interior and an outer rotor surface facing away from said rotor interior;
   wherein said first magnet pocket comprises a first magnet portion, a first inner magnet portion, and a first outer magnet portion, with said first magnet portion being disposed between said first inner magnet portion and said first outer magnet portion with respect to said rotor axis such that said first inner magnet portion and said first outer magnet portion are spaced from one another with respect to said rotor axis;
   wherein said second magnet pocket comprises a second magnet portion, a second inner magnet portion, and a second outer magnet portion, with said second magnet portion being disposed between said second inner magnet portion and said second outer magnet portion with respect to said rotor axis such that said second inner magnet portion and said second outer magnet portion are spaced from one another with respect to said rotor axis;
   a first magnet disposed in said first magnet portion, wherein said first magnet has a first magnet side facing said outer rotor surface and a second magnet side opposite said first magnet side of said first magnet and facing said inner rotor surface; and
   a second magnet disposed in said second magnet portion, wherein said second magnet has a first magnet side facing said outer rotor surface and a second magnet side opposite said first magnet side of said second magnet and facing said inner rotor surface;
   wherein said first inner magnet portion has a curved configuration that terminates at a first inner tip disposed between said second magnet side of said first magnet and said rotor axis, and wherein said second inner magnet portion has a curved configuration that terminates at a second inner tip disposed between said second magnet side of said second magnet and said rotor axis.
Statement 2: The rotor assembly as set forth in statement 1, wherein said first and second inner magnet portions have a talon configuration.
Statement 3: The rotor assembly as set forth in any one of the preceding statements, wherein said rotor has an inner first pocket surface facing said first magnet and defining said first inner magnet portion with said first magnet, wherein said inner first pocket surface has a first inner curve adjacent said first magnet side, a second inner curve adjacent said first inner curve, a third inner curve adjacent said second inner curve such that said second inner curve is disposed between said first inner curve of said inner first pocket surface and said third inner curve of said inner first pocket surface, a fourth inner curve adjacent said third inner curve such that said third inner curve is disposed between said second inner curve of said inner first pocket surface and said fourth inner curve of said inner first pocket surface, and a fifth inner curve adjacent said first inner tip such that said fourth inner curve is disposed between said third inner curve of said inner first pocket surface and said fifth inner curve of said inner first pocket surface.
Statement 4: The rotor assembly as set forth in statement 3, wherein said first inner curve of said inner first pocket surface has a first inner curve radius, said second inner curve of said inner first pocket surface has a second inner curve radius, said third inner curve of said inner first pocket surface has a third inner curve radius, said fourth inner curve of said inner first pocket surface has a fourth inner curve radius, and said fifth inner curve of said inner first pocket surface has a fifth inner curve radius, and wherein said first inner curve radius, said second inner curve radius, said third inner curve radius, said fourth inner curve radius, and said fifth inner curve radius are all different from one another.
Statement 5: The rotor assembly as set forth in statement 4, wherein said first inner curve radius and said third inner curve radius are less than said second inner curve radius, and wherein said second inner curve radius and said fourth inner curve radius are greater than said third inner curve radius.
Statement 6: The rotor assembly as set forth in any one of statements 3-5, wherein said rotor has an outer rotor radius defined between said outer rotor surface and said rotor axis, and wherein a ratio of said outer rotor radius to said first inner curve radius of said first inner curve of said inner first pocket surface is between 38.0:1 and 46.0: 1.
Statement 7: The rotor assembly as set forth in statement 6, wherein said ratio of said outer rotor radius to said first inner curve radius of said first inner curve of said inner first pocket surface is between 41.5:1 and 42.3: 1.
Statement 8: The rotor assembly as set forth in any one of statements 5-7, wherein said rotor has an outer rotor radius defined between said outer rotor surface and said rotor axis, and wherein a ratio of said outer rotor radius to said second inner curve radius of said second inner curve of said inner first pocket surface is between 3.5:1 and 4.3:1.
Statement 9: The rotor assembly as set forth in statement 8, wherein said ratio of said outer rotor radius to said second inner curve radius of said second inner curve of said inner first pocket surface is between 3.8:1 and 4.0:1.
Statement 10: The rotor assembly as set forth in any one of statements 5-9, wherein said rotor has an outer rotor radius defined between said outer rotor surface and said rotor axis, and wherein a ratio of said outer rotor radius to said third inner curve radius of said third inner curve of said inner first pocket surface is between 20.0:1 and 24.0:1.
Statement 11: The rotor assembly as set forth in statement 10, wherein said ratio of said outer rotor radius to said third inner curve radius of said third inner curve of said inner first pocket surface is between 22.0:1 and 22.6:1.
Statement 12: The rotor assembly as set forth in any one of statements 5-11, wherein said rotor has an outer rotor radius defined between said outer rotor surface and said rotor axis, and wherein a ratio of said outer rotor radius to said fourth inner curve radius of said fourth inner curve of said inner first pocket surface is between 10.0:1 and 14.0:1.
Statement 13: The rotor assembly as set forth in statement 12, wherein a ratio of said outer rotor radius to said fourth inner curve radius of said fourth inner curve of said inner first pocket surface is between 12.0:1 and 12.4:1.
Statement 14: The rotor assembly as set forth in any one of statements 5-13, wherein said rotor has an outer rotor radius defined between said outer rotor surface and said rotor axis, and wherein a ratio of said outer rotor radius to said fifth inner curve radius of said fifth inner curve of said inner first pocket surface is between 7.0:1 and 9.0:1.
Statement 15: The rotor assembly as set forth in statement 14, wherein said ratio of said outer rotor radius to said fifth inner curve radius of said fifth inner curve of said inner first pocket surface is between 7.9:1 and 8.1:1.
Statement 16: The rotor assembly as set forth in any one of the preceding statements, wherein said rotor has an inner second pocket surface facing said second magnet and defining said second inner magnet portion with said second magnet, wherein said inner second pocket surface has a first inner curve adjacent said first magnet side of said second magnet, a second inner curve adjacent said first inner curve of said inner second pocket surface, a third inner curve adjacent said second inner curve of said inner second pocket surface such that said second inner curve of said inner second pocket surface is disposed between said first inner curve of said inner second pocket surface and said third inner curve of said inner second pocket surface, a fourth inner curve adjacent said third inner curve of said inner second pocket surface such that said third inner curve is disposed between said second inner curve of said inner second pocket surface and said fourth inner curve of said inner second pocket surface, and a fifth inner curve adjacent said second inner tip such that said fourth inner curve of said inner second pocket surface is disposed between said third inner curve of said inner second pocket surface and said fifth inner curve of said inner first pocket surface.
Statement 17: The rotor assembly as set forth in statement 16, wherein said first inner curve of said inner second pocket surface has a first inner curve radius, said second inner curve of said inner second pocket surface has a second inner curve radius, said third inner curve of said inner second pocket surface has a third inner curve radius, said fourth inner curve of said inner second pocket surface has a fourth inner curve radius, and said fifth inner curve of said inner second pocket surface has a fifth inner curve radius, and wherein said first inner curve radius of said first inner curve of said inner second pocket surface, said second inner curve radius of said second inner curve of said inner second pocket surface, said third inner curve radius of said third inner curve of said inner second pocket surface, said fourth inner curve radius of said fourth inner curve of said inner second pocket surface, and said fifth inner curve radius of said fifth inner curve of said inner second pocket surface are all different from one another.
Statement 18: The rotor assembly as set forth in statement 17, wherein said first inner curve radius and said third inner curve radius of said inner second pocket surface are less than said second inner curve radius of said inner second pocket surface, and wherein said second inner curve radius and said fourth inner curve radius of said inner second pocket surface are greater than said third inner curve radius of said inner second pocket surface.
Statement 19: The rotor assembly as set forth in statement 18, wherein said rotor has an outer rotor radius defined between said outer rotor surface and said rotor axis, and wherein a ratio of said outer rotor radius to said first inner curve radius of said first inner curve of said inner second pocket surface is between 38.0:1 and 46.0:1.
Statement 20: The rotor assembly as set forth in statement 19, wherein said ratio of said outer rotor radius to said first inner curve radius of said first inner curve of said inner second pocket surface is between 41.5:1 and 42.3:1.
Statement 21: The rotor assembly as set forth in any one of statements 18-20, wherein said rotor has an outer rotor radius defined between said outer rotor surface and said rotor axis, and wherein a ratio of said outer rotor radius to said second inner curve radius of said second inner curve of said inner second pocket surface is between 3.5:1 and 4.3:1.
Statement 22: The rotor assembly as set forth in statement 21, wherein said ratio of said outer rotor radius to said second inner curve radius of said second inner curve of said inner second pocket surface is between 3.8:1 and 4.0:1.
Statement 23: The rotor assembly as set forth in any one of statements 18-22, wherein said rotor has an outer rotor radius defined between said outer rotor surface and said rotor axis, and wherein a ratio of said outer rotor radius to said third inner curve radius of said third inner curve of said inner second pocket surface is between 20.0:1 and 24.0:1.
Statement 24: The rotor assembly as set forth in statement 23, wherein said ratio of said outer rotor radius to said third inner curve radius of said third inner curve of said inner second pocket surface is between 22.0:1 and 22.6: 1.
Statement 25: The rotor assembly as set forth in any one of statements 18-24, wherein said rotor has an outer rotor radius defined between said outer rotor surface and said rotor axis, and wherein a ratio of said outer rotor radius to said fourth inner curve radius of said fourth inner curve of said inner second pocket surface is between 10.0: 1 and 14.0: 1.
Statement 26: The rotor assembly as set forth in statement 25, wherein a ratio of said outer rotor radius to said fourth inner curve radius of said fourth inner curve of said inner second pocket surface is between 12.0: 1 and 12.4: 1.
Statement 27: The rotor assembly as set forth in any one of statements 18-26, wherein said rotor has an outer rotor radius defined between said outer rotor surface and said rotor axis, and wherein a ratio of said outer rotor radius to said fifth inner curve radius of said fifth inner curve of said inner second pocket surface is between 7.0:1 and 9.0:1.
Statement 28: The rotor assembly as set forth in statement 27, wherein said ratio of said outer rotor radius to said fifth inner curve radius of said fifth inner curve of said inner second pocket surface is between 7.9:1 and 8.1:1.
Statement 29: The rotor assembly as set forth in any one of the preceding statements, wherein said rotor has an outer first pocket surface facing said first magnet and defining said first outer magnet portion with said first magnet, wherein said outer first pocket surface has a first outer curve adjacent said first magnet side, a second outer curve adjacent said first outer curve, a third outer curve adjacent said second outer curve such that said second outer curve is disposed between said first outer curve of said outer first pocket surface and said third outer curve of said outer first pocket surface, and a fourth outer curve adjacent said third outer curve such that said third outer curve is disposed between said second outer curve and said fourth outer curve.
Statement 30: The rotor assembly as set forth in statement 29, wherein said first outer curve of said outer first pocket surface has a first outer curve radius, said second outer curve of said outer first pocket surface has a second outer curve radius, said third outer curve of said outer first pocket surface has a third outer curve radius, and said fourth outer curve of said outer first pocket surface has a fourth outer curve radius, and wherein said first outer curve radius, said second outer curve radius, said third outer curve radius, and said fourth outer curve radius are all different from one another.
Statement 31: The rotor assembly as set forth in statement 30, wherein said rotor has an outer rotor radius defined between said outer rotor surface and said rotor axis, and wherein a ratio of said outer rotor radius to said first outer curve radius of said first outer curve of said outer first pocket surface is between 24.0:1 and 27.0:1.
Statement 32: The rotor assembly as set forth in statement 31, wherein said ratio of said outer rotor radius to said first outer curve radius of said first outer curve of said outer first pocket surface is between 25.0:1 and 26.0:1.
Statement 33: The rotor assembly as set forth in any one of statements 30-32, wherein said rotor has an outer rotor radius defined between said outer rotor surface and said rotor axis, and wherein a ratio of said outer rotor radius to said second outer curve radius of said second outer curve of said outer first pocket surface is between 3.0:1 and 4.0:1 (58.65mm / 17.0mm = 3.45).
Statement 34: The rotor assembly as set forth in statement 33, wherein said ratio of said outer rotor radius to said second outer curve radius of said second outer curve of said outer first pocket surface is between 3.40:1 and 3.50:1.
Statement 35: The rotor assembly as set forth in any one of statements 30-34, wherein said rotor has an outer rotor radius defined between said outer rotor surface and said rotor axis, and wherein a ratio of said outer rotor radius to said third outer curve radius of said third outer curve of said outer first pocket surface is between 3.0:1 and 4.0:1.
Statement 36: The rotor assembly as set forth in statement 35, wherein said ratio of said outer rotor radius to said third outer curve radius of said third outer curve of said outer first pocket surface is between 3.40:1 and 3.50:1.
Statement 37: The rotor assembly as set forth in any one of statements 30-36, wherein said rotor has an outer rotor radius defined between said outer rotor surface and said rotor axis, and wherein a ratio of said outer rotor radius to said fourth outer curve radius of said fourth outer curve of said outer first pocket surface is between 22.0:1 and 26.0:1.
Statement 38: The rotor assembly as set forth in statement 37, wherein said ratio of said outer rotor radius to said fourth outer curve radius of said fourth outer curve of said outer first pocket surface is between 23.9:1 and 24.5:1.
Statement 39: The rotor assembly as set forth in any one of statements 30-38, wherein a first outer thickness of said rotor is defined between said second outer curve and said outer rotor surface, wherein a second outer thickness of said rotor is defined between said third outer curve and said outer rotor surface, and wherein said second outer thickness is greater than said first outer thickness.
Statement 40: The rotor assembly as set forth in any one of the preceding statements, wherein said rotor has an outer second pocket surface facing said second magnet and defining said second outer magnet portion with said second magnet, wherein said outer second pocket surface has a first outer curve adjacent said first magnet side of said second magnet, a second outer curve adjacent said first outer curve of said outer second pocket surface, a third outer curve adjacent said second outer curve of said outer second pocket surface such that said second outer curve of said outer second pocket surface is disposed between said first outer curve of said outer second pocket surface and said third outer curve of said outer second pocket surface, and a fourth outer curve adjacent said third outer curve of said outer second pocket surface such that said third outer curve of said outer second pocket surface is disposed between said second outer curve of said outer second pocket surface and said fourth outer curve of said outer second pocket surface.
Statement 41: The rotor assembly as set forth in statement 40, wherein said first outer curve of said outer second pocket surface has a first outer curve radius, said second outer curve of said outer second pocket surface has a second outer curve radius, said third outer curve of said outer second pocket surface has a third outer curve radius, and said fourth outer curve of said outer second pocket surface has a fourth outer curve radius, and wherein said first outer curve radius of said first outer curve of said outer second pocket surface, said second outer curve radius of said second outer curve of said outer second pocket surface, said third outer curve radius of said third outer curve of said outer second pocket surface, and said fourth outer curve radius of said fourth outer curve of said outer second pocket are all different from one another.
Statement 42: The rotor assembly as set forth in statement 41, wherein said rotor has an outer rotor radius defined between said outer rotor surface and said rotor axis, and wherein a ratio of said outer rotor radius to said first outer curve radius of said first outer curve of said outer second pocket surface is between 24.0:1 and 27.0:1.
Statement 43: The rotor assembly as set forth in statement 42, wherein said ratio of said outer rotor radius to said first outer curve radius of said first outer curve of said outer second pocket surface is between 25.0:1 and 26.0:1.
Statement 44: The rotor assembly as set forth in any one of statements 41-43, wherein said rotor has an outer rotor radius defined between said outer rotor surface and said rotor axis, and wherein a ratio of said outer rotor radius to said second outer curve radius of said second outer curve of said outer second pocket surface is between 3.0:1 and 4.0:1 (58.65mm / 17.0mm = 3.45).
Statement 45: The rotor assembly as set forth in statement 45, wherein said ratio of said outer rotor radius to said second outer curve radius of said second outer curve of said outer second pocket surface is between 3.40:1 and 3.50:1.
Statement 46: The rotor assembly as set forth in any one of statements 41-45, wherein said rotor has an outer rotor radius defined between said outer rotor surface and said rotor axis, and wherein a ratio of said outer rotor radius to said third outer curve radius of said third outer curve of said outer second pocket surface is between .0:1 and 4.0:1.
Statement 47: The rotor assembly as set forth in statement 46, wherein said ratio of said outer rotor radius to said third outer curve radius of said third outer curve of said outer second pocket surface is between 3.40:1 and 3.50:1.
Statement 48: The rotor assembly as set forth in any one of statements 41-47, wherein said rotor has an outer rotor radius defined between said outer rotor surface and said rotor axis, and wherein a ratio of said outer rotor radius to said fourth outer curve radius of said fourth outer curve of said outer second pocket surface is between 22.0:1 and 26.0: 1.
Statement 49: The rotor assembly as set forth in statement 48, wherein said ratio of said outer rotor radius to said fourth outer curve radius of said fourth outer curve of said outer second pocket surface is between 23.9: 1 and 24.5: 1.
Statement 50: The rotor assembly as set forth in any one of statements 41-49, wherein a first outer thickness of said rotor is defined between said second outer curve of said outer second pocket surface and said outer rotor surface, wherein a second outer thickness of said rotor is defined between said third outer curve of said outer second pocket surface and said outer rotor surface, and wherein said second outer thickness is greater than said first outer thickness.
Statement 51: The rotor assembly as set forth in any one of the preceding statements, wherein an injection molded material is disposed in said first inner magnet portion and said first outer magnet portion of said first magnet pocket, and wherein an injection molded material is disposed in said second inner magnet portion and said second outer magnet portion of said second magnet pocket.
Statement 52: The rotor assembly as set forth in any one of statements 1-50, wherein said first inner magnet portion and said first outer magnet portion of said first magnet pocket are filled with air, and wherein said second inner magnet portion and said second outer magnet portion of said second magnet pocket are filled with air.
Statement 53: The rotor assembly as set forth in any one of the preceding statements, wherein said rotor has an outer rotor radius defined between said outer rotor surface and said rotor axis, wherein a first tip distance is defined between said first inner tip and said rotor axis, wherein a second tip distance is defined between said second inner tip and said rotor axis, and wherein a ratio of said outer rotor radius to said first tip distance is between 1.30:1 and 1.60:1 and a ratio of said outer rotor radius to said second tip distance is between 1.30:1 and 1.60: 1.
Statement 54: The rotor assembly as set forth in statement 53, wherein said ratio of said outer rotor radius to said first tip distance is between 1.40:1 and 1.50:1 and said ratio of said outer rotor radius to said second tip distance is between 1.40:1 and 1.50:1.
Statement 55: The rotor assembly as set forth in any one of the preceding statements, wherein said rotor has an inner rotor surface defining a rotor interior, wherein an inner rotor radius is defined between said inner rotor surface and said rotor axis, wherein a first tip distance is defined between said first inner tip and said rotor axis, wherein a second tip distance is defined between said second inner tip and said rotor axis, and wherein a ratio of said first tip distance to said inner rotor radius is between 1.15:1 and 1.22:1 and a ratio of said second tip distance to said inner rotor radius is between 1.15: 1 and 1.22:1.
Statement 56: The rotor assembly as set forth in statement 55, wherein said ratio of said first tip distance to said inner rotor radius is between 1.17:1 and 1.21: 1 and said ratio of said second tip distance to said inner rotor radius is between 1.17: 1 and 1.21: 1.
Statement 57: The rotor assembly as set forth in any one of the preceding statements, wherein said rotor has an inner rotor surface defining a rotor interior, and further comprising a shaft disposed in said rotor interior, and wherein said shaft has an outer shaft surface facing and engaged with said inner rotor surface.
Statement 58: The rotor assembly as set forth in statement 57, wherein said outer shaft surface defines a notch, and wherein said rotor has a first protrusion extending from said inner rotor surface into said notch for rotatably coupling said rotor to said rotor shaft.
Statement 59: The rotor assembly as set forth in statement 58, wherein said first protrusion is disposed between said first and second inner pockets with respect to said rotor axis.
Statement 60: The rotor assembly as set forth in any one of the preceding statements, further comprising a first inner protrusion adjacent said second magnet side of said first magnet, wherein said first inner protrusion extends into said first magnet pocket and partially separates said first magnet portion and said first inner magnet portion, and further comprising a second inner protrusion adjacent said second magnet side of said second magnet, and wherein said second inner protrusion extends into said second magnet pocket and partially separates said second magnet portion and said second inner magnet portion.
Statement 61: The rotor assembly as set forth in statement 60, wherein said first inner tip is disposed between said first inner protrusion and said rotor axis, and wherein said second inner tip is disposed between said second inner protrusion and said rotor axis.
Statement 62: The rotor assembly as set forth in any one of the preceding statements, wherein said first magnet, said second magnet, said first magnet pocket, and said second magnet pocket are further defined as a first magnet assembly, and wherein said rotor assembly further comprises a second magnet assembly, a third magnet assembly, a fourth magnet assembly, a fifth magnet assembly, and a sixth magnet assembly, with said first, second, third, fourth, fifth, and sixth magnet assemblies being equally angularly spaced from one another about said rotor axis.
Statement 63: An electric machine comprising said rotor assembly as set forth in any one of the preceding statements, and further comprising:
   a shaft extending along said rotor axis, wherein said rotor defines a rotor interior and said shaft is disposed in said rotor interior and coupled to said rotor; and
   a stator coupled to and disposed about said rotor with respect to said rotor axis.

## Claims

1. A rotor assembly for use in an electric machine, said rotor assembly comprising:
a rotor extending along and adapted to be rotatable about a rotor axis, wherein said rotor has a first rotor end and a second rotor end spaced from said first rotor end with respect to said rotor axis, wherein said rotor defines a first magnet pocket extending from said first rotor end to said second rotor end, wherein said rotor defines a second magnet pocket extending from said first rotor end to said second rotor end, and wherein said rotor has an inner rotor surface defining a rotor interior and an outer rotor surface facing away from said rotor interior;
wherein said first magnet pocket comprises a first magnet portion, a first inner magnet portion, and a first outer magnet portion, with said first magnet portion being disposed between said first inner magnet portion and said first outer magnet portion with respect to said rotor axis such that said first inner magnet portion and said first outer magnet portion are spaced from one another with respect to said rotor axis;
wherein said second magnet pocket comprises a second magnet portion, a second inner magnet portion, and a second outer magnet portion, with said second magnet portion being disposed between said second inner magnet portion and said second outer magnet portion with respect to said rotor axis such that said second inner magnet portion and said second outer magnet portion are spaced from one another with respect to said rotor axis;
a first magnet disposed in said first magnet portion, wherein said first magnet has a first magnet side facing said outer rotor surface and a second magnet side opposite said first magnet side of said first magnet and facing said inner rotor surface; and
a second magnet disposed in said second magnet portion, wherein said second magnet has a first magnet side facing said outer rotor surface and a second magnet side opposite said first magnet side of said second magnet and facing said inner rotor surface;
wherein said first inner magnet portion has a curved configuration that terminates at a first inner tip disposed between said second magnet side of said first magnet and said rotor axis, and wherein said second inner magnet portion has a curved configuration that terminates at a second inner tip disposed between said second magnet side of said second magnet and said rotor axis.

2. The rotor assembly as set forth in claim 1, wherein said first and second inner magnet portions have a talon configuration.

3. The rotor assembly as set forth in any one of the preceding claims, wherein said rotor has an inner first pocket surface facing said first magnet and defining said first inner magnet portion with said first magnet, wherein said inner first pocket surface has a first inner curve adjacent said first magnet side, a second inner curve adjacent said first inner curve, a third inner curve adjacent said second inner curve such that said second inner curve is disposed between said first inner curve of said inner first pocket surface and said third inner curve of said inner first pocket surface, a fourth inner curve adjacent said third inner curve such that said third inner curve is disposed between said second inner curve of said inner first pocket surface and said fourth inner curve of said inner first pocket surface, and a fifth inner curve adjacent said first inner tip such that said fourth inner curve is disposed between said third inner curve of said inner first pocket surface and said fifth inner curve of said inner first pocket surface.

4. The rotor assembly as set forth in claim 3, wherein said first inner curve of said inner first pocket surface has a first inner curve radius, said second inner curve of said inner first pocket surface has a second inner curve radius, said third inner curve of said inner first pocket surface has a third inner curve radius, said fourth inner curve of said inner first pocket surface has a fourth inner curve radius, and said fifth inner curve of said inner first pocket surface has a fifth inner curve radius, and wherein said first inner curve radius, said second inner curve radius, said third inner curve radius, said fourth inner curve radius, and said fifth inner curve radius are all different from one another.

5. The rotor assembly as set forth in claim 4, wherein said first inner curve radius and said third inner curve radius are less than said second inner curve radius, and wherein said second inner curve radius and said fourth inner curve radius are greater than said third inner curve radius.

6. The rotor assembly as set forth in any one of the preceding claims, wherein said rotor has an outer first pocket surface facing said first magnet and defining said first outer magnet portion with said first magnet, wherein said outer first pocket surface has a first outer curve adjacent said first magnet side, a second outer curve adjacent said first outer curve, a third outer curve adjacent said second outer curve such that said second outer curve is disposed between said first outer curve of said outer first pocket surface and said third outer curve of said outer first pocket surface, and a fourth outer curve adjacent said third outer curve such that said third outer curve is disposed between said second outer curve and said fourth outer curve.

7. The rotor assembly as set forth in claim 6, wherein said first outer curve of said outer first pocket surface has a first outer curve radius, said second outer curve of said outer first pocket surface has a second outer curve radius, said third outer curve of said outer first pocket surface has a third outer curve radius, and said fourth outer curve of said outer first pocket surface has a fourth outer curve radius, and wherein said first outer curve radius, said second outer curve radius, said third outer curve radius, and said fourth outer curve radius are all different from one another.

8. The rotor assembly as set forth in any one of claims 6 and 7, wherein a first outer thickness of said rotor is defined between said second outer curve and said outer rotor surface, wherein a second outer thickness of said rotor is defined between said third outer curve and said outer rotor surface, and wherein said second outer thickness is greater than said first outer thickness.

9. The rotor assembly as set forth in any one of the preceding claims, wherein an injection molded material is disposed in said first inner magnet portion and said first outer magnet portion of said first magnet pocket, and wherein an injection molded material is disposed in said second inner magnet portion and said second outer magnet portion of said second magnet pocket.

10. The rotor assembly as set forth in any one of claims 1-8, wherein said first inner magnet portion and said first outer magnet portion of said first magnet pocket are filled with air, and wherein said second inner magnet portion and said second outer magnet portion of said second magnet pocket are filled with air.

11. The rotor assembly as set forth in any one of the preceding claims, wherein said rotor has an outer rotor radius defined between said outer rotor surface and said rotor axis, wherein a first tip distance is defined between said first inner tip and said rotor axis, wherein a second tip distance is defined between said second inner tip and said rotor axis, and wherein a ratio of said outer rotor radius to said first tip distance is between 1.30: 1 and 1.60:1 and a ratio of said outer rotor radius to said second tip distance is between 1.30:1 and 1.60: 1.

12. The rotor assembly as set forth in any one of the preceding claims, wherein said rotor has an inner rotor surface defining a rotor interior, wherein an inner rotor radius is defined between said inner rotor surface and said rotor axis, wherein a first tip distance is defined between said first inner tip and said rotor axis, wherein a second tip distance is defined between said second inner tip and said rotor axis, and wherein a ratio of said first tip distance to said inner rotor radius is between 1.15: 1 and 1.22:1 and a ratio of said second tip distance to said inner rotor radius is between 1.15:1 and 1.22:1.

13. The rotor assembly as set forth in any one of the preceding claims, wherein said rotor has an inner rotor surface defining a rotor interior, and further comprising a shaft disposed in said rotor interior, wherein said shaft has an outer shaft surface facing and engaged with said inner rotor surface, wherein said outer shaft surface defines a notch, and wherein said rotor has a first protrusion extending from said inner rotor surface into said notch for rotatably coupling said rotor to said rotor shaft.

14. The rotor assembly as set forth in any one of the preceding claims, further comprising a first inner protrusion adjacent said second magnet side of said first magnet, wherein said first inner protrusion extends into said first magnet pocket and partially separates said first magnet portion and said first inner magnet portion, and further comprising a second inner protrusion adjacent said second magnet side of said second magnet, and wherein said second inner protrusion extends into said second magnet pocket and partially separates said second magnet portion and said second inner magnet portion.

15. An electric machine comprising said rotor assembly as set forth in any one of the preceding claims, further comprising:
a shaft extending along said rotor axis, wherein said rotor defines a rotor interior and said shaft is disposed in said rotor interior and coupled to said rotor; and
a stator coupled to and disposed about said rotor with respect to said rotor axis.
